**Europäisches Patentamt**

**European Patent Office**

**Office européen des brevets**

(11) Publication number: **0 129 400**
**B1**

(12) # EUROPEAN PATENT SPECIFICATION

(45) Date of publication of patent specification: **20.01.88**

(51) Int. Cl.⁴: **F 16 B 7/14**

(21) Application number: **84303986.8**

(22) Date of filing: **13.06.84**

(54) Free stop retainer.

(30) Priority: **15.06.83 JP 107394/83**

(43) Date of publication of application:
**27.12.84 Bulletin 84/52**

(45) Publication of the grant of the patent:
**20.01.88 Bulletin 88/03**

(84) Designated Contracting States:
**DE GB**

(56) References cited:
**DE-A-2 103 695**
**DE-A-2 949 436**
**DE-C-1 097 217**
**FR-A-1 443 259**
**FR-A-1 581 941**
**FR-A-1 596 640**
**FR-A-2 314 689**

(73) Proprietor: **SUGATSUNE KOGYO CO., LTD.**
**No. 8-11, 1-chome Higashi-Kanda**
**Chiyoda-ku Tokyo (JP)**

(72) Inventor: **Ishii, Hiroyuki c/o Sugatsune Kogyo**
**Co. Ltd**
**No. 8-11 Higashi-kanda 1 chome Chiyoda-ku**
**Tokyo (JP)**

(74) Representative: **Wain, Christopher Paul et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a free stop retainer capable of fixedly securing an article adjustably in height to a post such as a side plate provided, for example, to be used for placing a rack for books in a bookcase or hanging a hat.

There have been various structure in which racks are mounted elevationally adjustably in height at rack posts to replace the position between upper and lower positions.

However, in the conventional structure of this type, the rack is inserted into holes perforated at the rack posts and then clamped with screws so as not to rotatably move the rack retainer body, or the rack is engaged in the threaded holes perforated at the rack posts to secure the rack body to the posts. Accordingly, it takes a lot of labour to mount the rack or to replace the position upward or downward. In the clamping type made of wooden post and side plates, it is necessary to drive a hard material such as metal or hard plastic to the wooden posts and to perforate threaded holes. Even if thus constructed, the structure is readily loosened by a vibration. When the rack plate is replaced between upper and lower positions, frictional scratch produced during clamping occurs on the surface of the side plates, which affects the external appearance.

Since a number of holes and threaded holes should be formed at suitable intervals at the rack posts so as to adjust the height of the rack, it is expensive to produce. The rack can be replaced only at specified points depending the interval unit between the holes and threaded holes, so that it is difficult to obtain the optimum interval between the racks to meet the size (height) of an article to be placed on the rack, with the result that the space between the racks cannot be effectively utilised.

It is known from DE—A—2949436 to provide a retainer engaging in a groove in a post, in which the retainer can be locked in any desired position. Locking is achieved by means of a vertically disposed locking bar of non-circular cross-section. When the locking bar is disposed with its minor dimension between the retainer surface and the post, the retainer can be moved. When the locking bar is turned, the retainer is located. This method requires an unsightly locking lever and also may cause scratching of the post.

It is also known from FR—A—1443259 to lock together two telescoping tubes by providing an end of the internal tube with a sloping surface, and providing a stop engageable and disengageable between the surface and an internal face of the outer tube. The apparatus disclosed is however somewhat cumbersome.

Accordingly, an object of this invention is to provide a free stop retainer which can eliminate the afore mentioned drawbacks of the conventional retainer and can be elevationally slidably engaged with the longitudinal rail hole formed at the side wall of a hollow post, also be fixedly secured at the desired position by a simple manual operation without using a particular tool and used in a rigidly fixed state by placing racks in the desired adjusted height or hanging an article.

According to the present invention, there is provided a free stop retainer comprising a retainer body having an engaging portion and an article retaining portion, and a post formed with at least one longitudinal groove, said engaging portion elevationally slidably engaged in a longitudinal rail hole in one side wall of said post in such a manner that said article retaining portion projects outwardly from the rail hole and a pivotable lever which is provided with a stopper at one end thereof, characterised in that said retainer body is formed with a tapered surface opposed to a side wall of said post such that the space between the surface and the side wall is a maximum width at the lower end thereof and a minimum width at the upper end thereof, in that said stopper is movable on the tapered surface, and in that said lever is resiliently spring biased to urge the stopper towards the minimum width of said space.

Embodiments of the invention will now be more particularly described by way of example and with reference to the accompanying drawings, in which:

FIGURE 1 is a plan view of a first embodiment of a free stop retainer embodying the present invention;

FIGURE 2 is a longitudinally sectional plane view of the free stop retainer;

FIGURE 3 is a longitudinally sectional view taken along the line III—III in Figure 2;

FIGURE 4 is an enlarged longitudinal sectional side view along the line IV—IV in Figure 2;

FIGURE 5 is an enlarged longitudinally sectional side view of second embodiments of the free stop retainer;

FIGURE 6 is a sectional view taken along the line VI—VI in Figure 5;

FIGURES 7 and 8 are longitudinally sectional side and plan vies of a third embodiment of the free stop retainer;

FIGURE 9(A) is an upper perspective view of the third embodiment; FIGURE 9(B) is a lower perspective view of this embodiment;

FIGURE 10 is a perspective view of the lever of the retainer of this embodiment;

FIGURES 11 and 12 are longitudinally sectional side and plan views of a fourth embodiment of the free stop retainer;

FIGURE 13(A) is an upper perspective view of this embodiment; FIGURE 13(B) is a lower perspective view of this embodiment; and

FIGURE 14 is a perspective view of the lever of the retainer of this embodiment.

Referring now to the accompanying drawings.

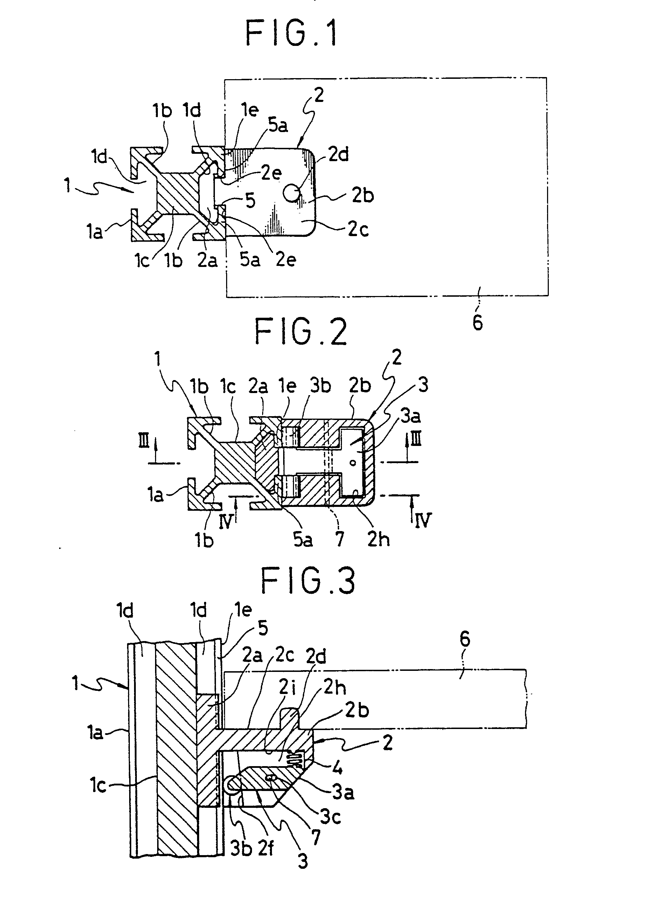

Figures 1 to 4 show a first embodiment of a free stop retainer. The free stop retainer generally comprises a post 1, a retainer body 2, a lever 3 and a spring 4.

The post 1 has an outer wall 1a of rectangular cross-section, a core 1c of square cross-section connected to the outer wall 1a through diagonal

coupling walls 1b, 1b, 1b, 1b arranged diagonally from the core 1c integrally to the corners of outer wall 1a to form longitudinal grooves 1d between the coupling walls 1b and 1b and the core 1a within the outer wall 1a in such a manner that a longitudinal rail hole 5 is opened over the entire length at the centre of a side wall 1e forming part of the outer wall 1a to communicate with one groove 1d.

The retainer body 2 has an engaging portion 2a and an article retaining portion 2b formed integrally therewith.

The engaging portion 2a is formed with suitable dimensions and shape adapted for internally engaging the cross-sectional shape of one groove 1d in the post 1. The article retaining portion 2b has an article holding projection 2d stood on the article placing surface 2c of an article 6 of a rack. In the embodiment exemplified, longitudinal grooves 2e, 2e are provided symmetrically at both right and left ends of a base end, and right and left side opening edges 5a, 5b of the rail hole 5 engage with the grooves 2e, 2e in the post 1. In this structure, the retainer body 2 is engaged elevationally slidably along the rail hole 5 by engaging the engaging portion 2a with the groove 1d of the post 1 to project the article retaining portion 2b from the rail hole 5.

The retainer body 2 is disengaged from the rail hole 5 by slidably moving out from the upper or lower ends of the post 1.

The retainer body 2 has a tapered surface 2f opposed to the side wall 1e to define a space 2g between the surface 2f and the outer surface of the side wall 1e of the post 1. The space 2g has a maximum width l at the lower opening and a minimum width l' at the upper end.

Further, the retainer body 2 has a T-shaped slot 2h formed and opened to communicate with the space 2g at the lower side of the article retaining portion 2b to define a shape of H-shaped cross-section open at the lower end for internally mounting the lever 3.

The lever 3 is formed in T-shaped lateral shape adapted for the internal dimension of the slot 2h in its body 3a with a stopper 3b laterally formed at the end adapted for the space 2g and the slot 2h.

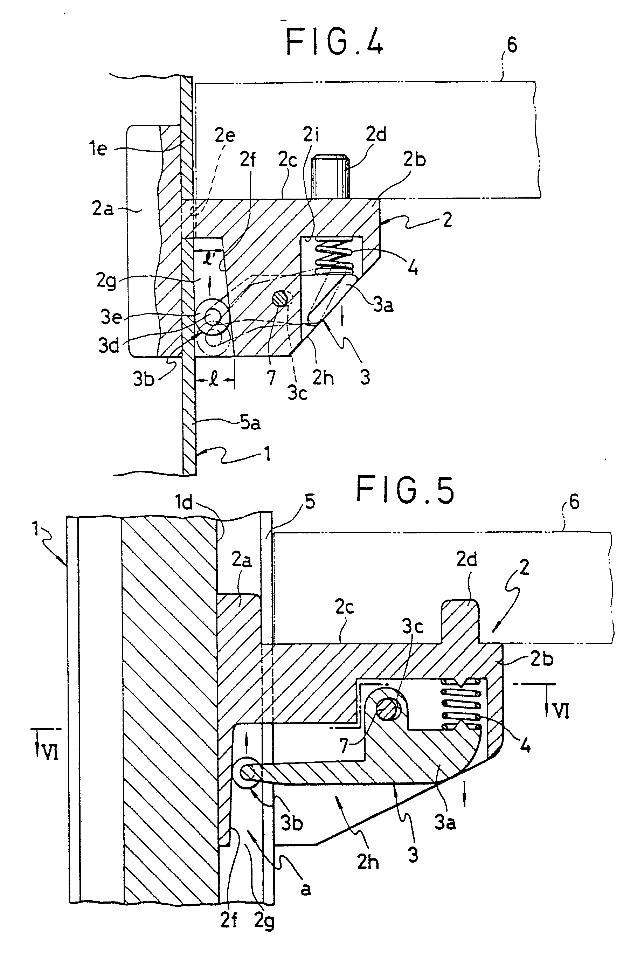

This lever 3 is pivotally secured to the right and left side walls of the article retaining portion 2b of the retainer body 1 by means of a shaft 7 substantially at an intermediate point thereof, to be mounted in the space 2g and slot 2h in such a manner that the stopper 3b is contacted with the tapered surface 2f. A spring 7 is interposed between the other end thereof and the bottom wall 2i of the slot 2h so as to be resiliently urged clockwise (as designated by an arrow in Figure 4) and so that the stopper 3b is always interposed between the tapered surface 2f and the side wall 1e of the post 1 to secure the retainer body 2 to the post 1.

The axial hole 3c of the lever 3 is formed in an idle hole. The lever 3 may be rotated counterclockwise (as designated by two-dotted broken line in Figure 4) by pressing the other end of the body 3a by a finger or the like against the tension of the spring 4 to move the stopper 3b in a direction towards the wider end of the space 2g.

It is noted that the post 1 is not limited to the exemplified example in the drawings. For example, the engaging portion 2a may be formed without a gap between the side walls 1e formed by a partition plate (not shown) instead of the core 1c and formed with a space slidably engaged therewith. Further, a hollow member of rectangular cross-sectional shape may be used.

It is further noted that the stopper 3b may be, as shown, symmetrically projected with shafts 3d, 3d from both right and left sides at the end of the body 3b formed of a hard material to rotatably journal rollers 3e, 3e, or that the stopper 3b may be formed of a soft material made of plastic or rubber integrally at the end of the body 3a, in which case the stopper 3b may be of any shape, preferably slidable on the tapered surface 2f by providing in a roller shape or spherical shape.

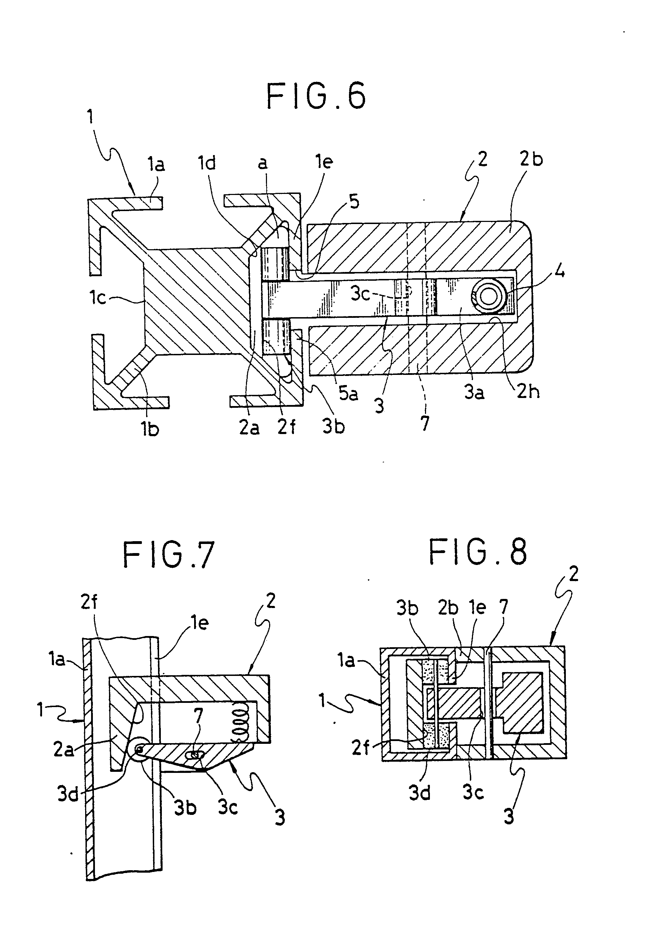

Figures 5 and 6 show a second embodiment of a free stop retainer. A space 2g is formed at the lower side of the engaging portion 2a. A tapered surface 2f is opposed to the inner surface of the side wall 1e of the post 1, and a gap for interposing a stopper 3b is formed between the inner surface of the side wall 1e and the tapered surface 2f.

Further, a slot 2h and the body 3a of the lever 3 are formed substantially at the same cross-section so that a lever 3 is rotatably journalled in the slot 2h.

The lever 3 is formed at the right and left side ends with stoppers 3b of substantially planar T shape. The end of the lever 3 projects from the rail hole 5 of the post 2 into the space 2g of the engaging portion 2a engaged with the groove 1d of the post 1 to be disposed in the gap. The other structure is constructed in the same manner as the first embodiment of the free stop retainer.

In the above structure, an article 6 is mounted using the free stop retainer of this embodiment as below.

Necessary number of retainer bodies 2 are engaged in advance with the post 1. The lever 3 journalled at the retainer body 2 is resiliently urged clockwise (as designated by an arrow in Figures 4 and 5). Thus, the stopper 3b is guided along the tapered surface 2f, interposed between the tapered surface 3f and the side wall 1e of the post 1. In this manner, the engaging portion 2a is urged to the inner surface of the side wall 1e by the stopper 3b in Figure 4, and the engaging portion 2a is urged under pressure to the core 1c and the coupling walls 1, 1b so that the retainer body 2 is secured to the post 1 in Figure 5.

In the above-described secured state, when the rear end of the lever 3 is pressed by a finger or the like, the lever 3 is rotated counterclockwise about the shaft 7 against the tension of the spring. Thus, the stopper 3b provided at the end is rotated in the direction opposite to the arrow, i.e., toward the maximum width of the lower end of the space as designated by two-dotted broken line in Figure 4, thereby releasing the pressure against the side wall 1e.

Consequently, the retainer body 2 is released from securing, and the retainer body 2 can slide freely along the rail hole 5.

Once the pressure on the lever 3 is released when the retainer body 2 has been slidably moved to the desired position, the lever 3 is elastically urged by the spring clockwise. Thus, the stopper 3b is moved toward the upper end in the narrow space under the guidance of the tapered surface 2f. The stopper 3b thus urges the side wall 1e leftwardly in Figure 4 and rightwardly in Figure 5.

Therefore, the side wall 1e is interposed between the stopper 3b and the engaging portion 2a in the first embodiment in Figure 4, and the engaging portion 2a is interposed between the stopper 3b and the core 1c and the coupling walls 1b, 1b in the second embodiment in Figure 5. Thus, the retainer body 2 is secured at the desired position.

At this time it is noted that the article 6 may be placed in advance on the article retaining portion 2b, or it may be placed on the article retaining portion 2b after the retainer body 2 is secured as described above.

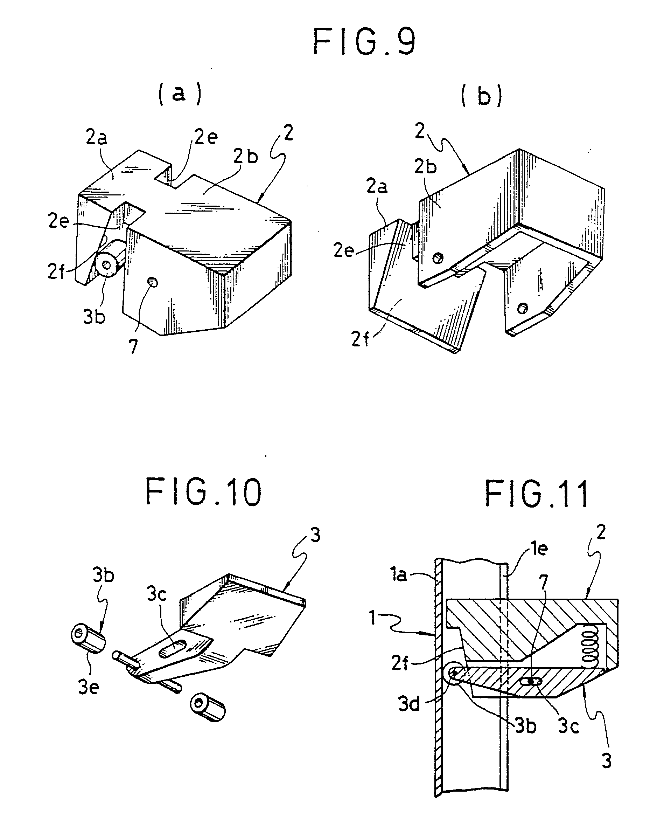

Figures 7 and 8 show a third embodiment of a free stop retainer. In this embodiment, the post 1 has a C-shaped cross-section. In this case, before the engaging portion 2a is urged to the outer wall 1a of the post 1 in the secured state, the article retaining portion 2b of the retainer body 2 contacts the outer surface of the side wall 1e of the post 1. Thus, the side wall 1e is interposed between the stopper 3b and the article retaining portion 2b, thereby obtaining the secured state. Figures 9 and 10 show the arrangement of the retainer body 2 and the lever 3 of Figure 7.

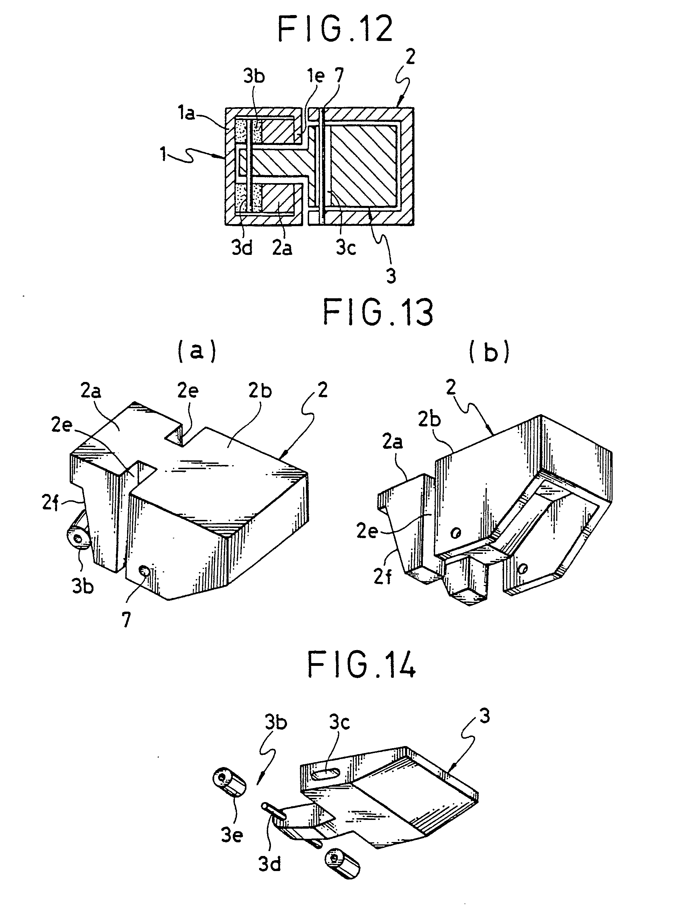

Figures 11 and 12 show a fourth embodiment of a free stop retainer. In this embodiment, the post 1 has a C-shaped cross-section, but the tapered surface 2f of the retainer body 2 is different from those of the previous embodiments, and is formed in an outwardly inverted tapered shape at the base end side, in which the stopper 3b is engaged between the tapered surface 2f and the inner surface of the outer wall 1a of the post 1. Thus, the engaging portion 2c of the retainer body 2 is urged between the stopper 3b and the inner surface of the side wall 1e of the post 1, thereby obtaining the secured state. Figures 13 and 14 show the retainer body 2 and the lever 3 shown in Figures 11 and 12.

According to the free stop retainer constructed as described above, the retainer body 2 formed with the engaging portion 2a and the article retaining portion 2b is internally engaged elevationally slidably in the rail hole 5 longitudinally formed at the side wall 1e of the post 1 so that the article retaining portion 2b is projected from the rail hole 5 outwardly. The tapered surface 2f of the retainer body 2 is opposed in space to the side wall 1e of the post 1 in such a manner that the space to the side wall 1e is the maximum width I at the lower end and the minimum width I' at the upper end, and the pivotable lever 3 is provided with the stopper 3b guided on the tapered surface. The lever 3 is resiliently urged by the spring 4 in such a direction that the stopper 3b contacts the side wall 1e of the post 1, and helps secure the retainer body 2 to the post 1. Consequently, the necessary number of levers 3 are engaged to cause the bodies 2 to slide, after which they are released, thereby securing them to freely place or hang the article 6 in any position. Further, the retainer body 2 can be elevationally moved along the post 1, fixed or moved by the ready operation of the levers 3. Therefore, the article 6 may be not only placed or hung at the prescribed position, but may also be simply, readily, and rapidly replaced in another elevational position. In addition, since it is not necessary to provide a number of holes at the post 1, it may not only be inexpensively manufactured, but when a load is applied to the retainer body 2, the stopper 3b is advanced further deeply into the space 2g, thereby strengthening the secured state.

## Claims

1. A free stop retainer comprising a retainer body (2) having an engaging portion (2a) and an article retaining portion (2b), and a post (1) formed with at least one longitudinal groove (1d), said engaging portion (2a) elevationally slidably engaged in a longitudinal rail hole (5) in one side wall (1e) of said post in such a manner that said article retaining portion (2b) projects outwardly from the rail hole and a pivotable lever (3) which is provided with a stopper (3b) at one end thereof, characterised in that said retainer body (2) is formed with a tapered surface (2f) opposed to a side wall (1e or 1a) of said post such that the space between the surface and the side wall is a maximum width (I) at the lower end thereof and a minimum width (I') at the upper end thereof, in that said stopper (3b) is movable on the tapered surface, and in that said lever (3) is resiliently spring biased to urge the stopper (3b) towards the minimum width of said space.

2. A free stop retainer as claimed in claim 1, characterised in that the tapered surface (2f) of said retainer body (2) is adapted to cooperate with the outer surface of the side wall (1e) of said post (1).

3. A free stop retainer as claimed in claim 1, characterised in that the tapered surface (2f) of said retainer body (2) is adapted to cooperate with the inner surface of the side wall (1e or 1a) of said post (1).

4. A free stop retainer as claimed in any one of the preceding claims, characterised in that said stopper (3b) comprises a roller journalled at one end of said lever (3).

5. A free stop retainer as claimed in any one of claims 1 to 3, characterised in that said stopper (3b) is formed integrally with said lever (3) and is made of a soft material.

**Patentansprüche**

1. Bewegliche Arretier- und Haltevorrichtung mit einem einen Eingriffsteil (2a) und einen Objekt-Halteteil (2b) aufweisenden Haltekörper (2), einen Pfosten (1), der mit wenigstens einer Längsrille (1d) ausgebildet ist, und einem schwenkbaren Hebel (3), an dessen einem Ende eine Arretiereinrichtung (3b) vorgesehen ist, wobei der genannte Eingriffsteil (2a) in eine längsverlaufende Schienenöffnung (5) in einer Seitenwand (1e) des genannten Pfostens höhenverschiebbar derart eingreift, daß der genannte Objekt-Halteteil (2b) von der Schienenöffnung nach außen vorspringt, dadurch gekennzeichnet, daß der genannte Haltekörper (2) mit einer einer Seitenwand (1e oder 1a) des genannten Pfostens gegenüberliegenden, sich verjüngenden Fläche (2f) derart ausgebildet ist, daß der Zwischenraum zwischen der Fläche und der Seitenwand an seinem unteren Ende eine größte Breite (1) und an seinem oberen Ende eine geringste Breite (1') aufweist, daß die genannte Arretiereinrichtung (3b) an der sich verjüngenden Fläche bewegbar ist, und daß der genannte Hebel (3) elastisch federbeaufschlagt ist, um die Arretiereinrichtung (3b) in Richtung der geringsten Breite des genannten Zwischenraums zu drängen.

2. Bewegliche Arretier- und Haltevorrichtung nach Anspruch 1, dadurch gekennzeichnet, daß die sich verjüngende Fläche (2f) des genannten Haltekörpers (2) ausgebildet ist, um mit der äußeren Fläche der Seitenwand (1e) des genannten Pfostens (1) zusammenzuwirken.

3. Bewegliche Arretier- und Haltevorrichtung nach Anspruch 1, dadurch gekennzeichnet, daß die sich verjüngende Fläche (2f) des genannten Haltekörpers (2) ausgebildet ist, um mit der inneren Fläche der Seitenwand (1e oder 1a) des genannten Pfostens (1) zusammenzuwirken.

4. Bewegliche Arretier- und Haltevorrichtung nach einem der vorhergehenden Ansprüche, dadurch gekennzeichnet, daß die genannte Arretiereinrichtung (3b) eine Rolle umfaßt, die an einem Ende des genannten Hebels (3) drehgelagert ist.

5. Bewegliche Arretier- und Haltevorrichtung nach einem der Ansprüche 1 bis 3, dadurch gekennzeichnet, daß die genannte Arretiereinrichtung (3b) einstückig mit dem genannten Hebel (3) ausgebildet und aus einem weichen Material hergestellt ist.

**Revendications**

1. Support librement blocable en hauteur, comprenant une pièce de support (2) avec une partie de fixation (2a) et une partie porte-objet (2b), ainsi qu'un montant (1) pourvu d'au moins une rainure longitudinale (1d), la partie de fixation (2a) étant engagée et pouvant coulisser en hauter dans une ouverture longitudinale formant un rail (5) dans une paroi latérale (1e) du montant, de manière que la partie porte-objet (2b) fasse saillie vers l'extérieur par rapport à l'ouverture formant rail, le support comprenant, en outre, un levier oscillant (3) qui est muni d'un élément d'arrêt (3b) à l'une de ses extrémités, caractérisé en ce que la pièce de support (2) est pourvue d'une surface oblique (2f) en regard d'une paroi latérale (1e ou 1a) du montant, l'agencement étant tel que l'intervalle entre la surface oblique et la paroi latérale possède une largeur maximale (I) à l'extrémité inférieure de cet intervalle et une largeur minimale (I') à son extrémité supérieure, que l'élément d'arrêt (3b) est déplacable sur la surface oblique et que le levier (3) est solicité par un ressort pour déplacer l'élément d'arrêt (3b) vers la largeur minimale de l'intervalle.

2. Support selon la revendication 1, caractérisé en ce que la surface oblique (2f) de la pièce de support (2) est conçue pour coopérer avec la surface externe de la paroi latérale (1e) du montant (1).

3. Support selon la revendication 1, caractérisé en ce que la surface oblique (2f) de la pièce de support (2) est conçue pour coopérer avec la surface interne de la paroi latérale (1e ou 1a) du montant (1).

4. Support selon l'une quelconque des revendications précédentes, caractérisé en ce que l'élément d'arrêt (3b) est constitué par un galet monté rotatif sur une extrémité du levier (3).

5. Support selon l'une quelconque des revendications 1 à 3, caractérisé en ce que l'élément d'arrêt (3b) est réalisé d'un seul tenant avec le levier (3) et est constitué d'un matériau tendre ou souple.

# FIG.1

# FIG.2

# FIG.3

1

0 129 400

# FIG.4

# FIG.5

# FIG.6

# FIG.7

# FIG.8

# FIG.9

## (a)

## (b)

# FIG.10

# FIG.11

# FIG.12

# FIG.13

(a)

(b)

# FIG.14